# EUROPÄISCHE PATENTSCHRIFT

(11) **EP 0 318 975 B1**
(45) Veröffentlichungstag und Bekanntmachung des Hinweises auf die Patenterteilung: **02.06.1993**
(21) Anmeldenummer: 88120011.7
(22) Anmeldetag: 30.11.1988
(51) Int. Cl.: G06F 15/38, G09G 1/00

(54) **Verfahren und Anordnung zum Bearbeiten von verschiedensprachigen Texten**
Method and arrangement for treating texts in dissimilar languages
Méthode et dispositif pour le traitement de textes dans différentes langues

(30) Priorität: 03.12.1987 DE 3741011
(43) Veröffentlichungstag der Anmeldung: 07.06.1989
(73) Patentinhaber: SIEMENS AKTIENGESELLSCHAFT, 80333 München (DE)
(72) Erfinder: Günther, Gerd-Joachim, Dipl.-Ing.(FH), D-8000 München 60 (DE)

(56) Entgegenhaltungen:
- EP-A- 0 081 784
- EP-A- 0 175 357
- EP-A- 0 196 898
- EP-A- 0 213 905
- IBM TECHNICAL DISCLOSURE BULLETIN, Band 21, Nr. 11, April 1979, Seiten 4672-4674, New York, US; M.A. BATEY: "Reverse overwrite protection on display"
- SIEMENS POWER ENGINEERING, Band 6, Nr. 3, Mai/Juni 1984, Seiten 164-167, Passau, DE; H.-D. HELMERT: "New alphanumeric display unit for the arab countries"

## Beschreibung

Die Erfindung bezieht sich auf ein Verfahren und eine Anordnung zum Bearbeiten von verschiedensprachigen Texten gemäß dem Oberbegriff des Patentanspruches 1.

Im Geschäftsverkehr mit anderssprachigen Ländern, beispielsweise arabischen Ländern, ist es üblich, Texte sowohl in der Landessprache, in diesem Fall arabisch, als auch in einer international weit verbreiteten Sprache, wie beispielsweise englisch oder deutsch, zu übertragen. Die Übertragung der Texte erfolgt üblicherweise unter Verwendung einer Textstation, beispielsweise einer Fernschreibmaschine. Falls die Texte zweisprachig übertragen werden sollen, ist es denkbar, zunächst den Text in der einen und dann anschließend in der anderen Sprache zu übertragen. Falls der Text aus mehreren Absätzen besteht, so wäre es vorteilhaft, einander entsprechende Absätze in den verschiedenen Sprachen aufeinanderfolgend zu übertragen.

Es ist auch möglich, an einem Ausgabemedium, beispielsweise einem Bildschirm, die Texte in zwei Hälften des Bildschirms darzustellen, wobei in der einen Hälfte die Texte in der einen Sprache und in der anderen Hälfte die Texte in der anderen Sprache dargestellt werden. Bei modernen Textstationen, die mit einem Bildschirm versehen sind, ist es allgemein bekannt, daß die Texte bearbeitet werden können. Derartige Bearbeitungsfunktionen sind beispielsweise das Löschen und das Korrigieren sowie das Einfügen von Textteilen. Bei einer Darstellung der verschiedensprachigen Texte in den beiden Hälften am Bildschirm ist das Durchführen derartiger Bearbeitungsfunktionen jedoch schwierig, da bei bekannten Textstationen jeweils die ganzen Zeilen verarbeitet werden, d. h. beispielsweise beim Löschen oder Einfügen von Textteilen verschiebt sich nicht nur der Text jeweils in der einen Hälfte der Zeile, sondern fälschlicherweise auch in der anderen Hälfte der Zeile, so daß die Bearbeitung der Texte sehr schwierig ist.

Aus der Druckschrift IBM Technical Disclosure Bulletin, Band 21, Nr. 11, April 1979, Seiten 4672 bis 4674, New York, US; M. A. Batey: "Reverse overwrite protection on display" ist es bekannt, Sprachtexte mit sprachbezogenen unterschiedlichen Hauptschreibrichtungen (lateinisch/arabisch) ein- oder gemischtsprachig in einer Bildschirmzeile darzustellen. Die unterschiedlichen Hauptschreibrichtungen werden dabei durch Schreibrichtungsanzeiger angezeigt.

Aus der EP-A-0 213 905 (OKAMOTO) ist eine Textstation (Übersetzungsmaschine) mit zwei Bildschirmhälften bekannt, wobei in Abhängigkeit einer der Bildschirmhälften zugeordneten Schreibmarke durch das Eingeben von Zeichen in den Bildschirmhälften separate Texte gebildet und dargestellt werden.

Der Erfindung liegt daher die Aufgabe zugrunde, ein Verfahren und eine Anordnung zum Bearbeiten von verschiedensprachigen Texten anzugeben, bei denen die verschiedensprachigen Texte auf einfache Weise, unabhängig voneinander an einem Bildschirm einer Textstation darstellbar und bearbeitbar sind und dabei eine durch die Darstellung und Bearbeitung der Texte zugewiesene Zuordnung der Texte zueinander sichtbar erhalten bleibt.

Erfindungsgemäß wird die Aufgabe bei dem Verfahren der eingangs genannten Art durch die im kennzeichnenden Teil des Patentanspruches 1 angegebenen Merkmale gelöst.

Das Verfahren gemäß der Erfindung hat den Vorteil, daß die Textstation sehr benutzerfreundlich wird, da die Texte in den beiden Hälften ohne Rücksicht auf die Texte in der jeweils anderen Hälfte bearbeitet werden können.

Die Darstellung in den beiden Hälften kann auch dann erfolgen, wenn zusätzlich Texte über beide Hälften hinweg in einer der beiden Sprachen bzw. Hauptschreibrichtungen dargestellt werden. In Abhängigkeit davon, in welcher Hauptschreibrichtung der jeweilige Text erstellt wurde, werden selbsttätig entsprechende Bearbeitungsfunktionen ausgeführt. Beispielsweise springt die Schreibmarke an jeweils die Stelle zurück, die dem Neubeginn einer Zeile in der jeweiligen Hauptschreibrichtung zugeordnet ist.

Das Verfahren gemäß der Erfindung wird in vorteilhafter Weise insbesondere dann eingesetzt, wenn die Texte in jeder beiden Hälften in unterschiedlichen Schreibrichtungen gemischt dargestellt werden. Die Umschaltung in die Darstellung und Bearbeitung in den beiden Hälften und die Rückschaltung in die ganzzeilige Darstellung erfolgt vorteilhafterweise durch das Betätigen einer entsprechenden Taste. Es ist auch möglich, das Umschalten und das Rückschalten unter Verwendung eines am Bildschirm dargestellten Menüs durchzuführen.

Um sofort erkennen zu können, welche Hauptschreibrichtung in der jeweiligen Hälfte eingestellt ist, ist es vorteilhaft, wenn in jeder Hälfte entsprechende Schreibrichtungsanzeiger dargestellt werden, die die Hauptschreibrichtung in der jeweiligen Hälfte anzeigen. Die Hauptschreibrichtungen in den beiden Hälften können wählbar ausgebildet sein oder auch in der Textstation fest eingestellt sein. Beispielsweise wird in der linken Hälfte die Hauptschreibrichtung entsprechend der Schreibrichtung bei der Eingabe von lateinischen Zeichen und in der rechten Hälfte die Hauptschreibrichtung entsprechend der Schreibrichtung bei der Eingabe von arabischen Schriftzeichen eingestellt. Die jeweilige Hauptschreibrichtung wird zweckmäßigerweise in einer Zustandszeile am Bildschirm dargestellt und die jeweils angegebene Hauptschreibrichtung ändert sich, je nachdem in welcher Hälfte sich die Schreibmarke befindet. Bei einer Darstellung von Zeichen in verschiedenen Schreibrichtungen in einer Hälfte kann in der Zustandszeile die jeweilige Schreibrichtung angegeben werden.

Eine Anordnung zur Durchführung des Verfahrens enthält eine Steuereinheit, die mit einer Tastatur und einem Bildschirm verbunden ist und die eine Darstellung und Bearbeitung der Texte in den beiden Hälften unabhängig voneinander steuert und die gespeicherten Bearbeitungsfunktionen nur in derjenigen Hälfte ausführt, in der sich die Schreibmarke gerade befindet.

Ein Ausführungsbeispiel des erfindungsgemäßen Verfahrens und einer Anordnung zur Durchführung des Verfahrens werden im folgenden in Zusammenhang mit der Zeichnung näher erläutert. Es zeigen
FIG 1 eine Darstellung eines ersten Textes in einer Grundstellung,
FIG 2 eine zusätzliche Darstellung eines weiteres Textes in der Grundstellung,
FIG 3 eine zusätzliche Darstellung eines weiteren Textes an der linken Hälfte eines Bildschirms,
FIG 4 eine zusätzliche Darstellung eines weiteren Textes in der rechten Hälfte am Bildschirm,
FIG 5 eine zusätzliche Darstellung eines Textes in der Grundstellung und
FIG 6 ein Blockschaltbild einer Anordnung zur Durchführung des Verfahrens.

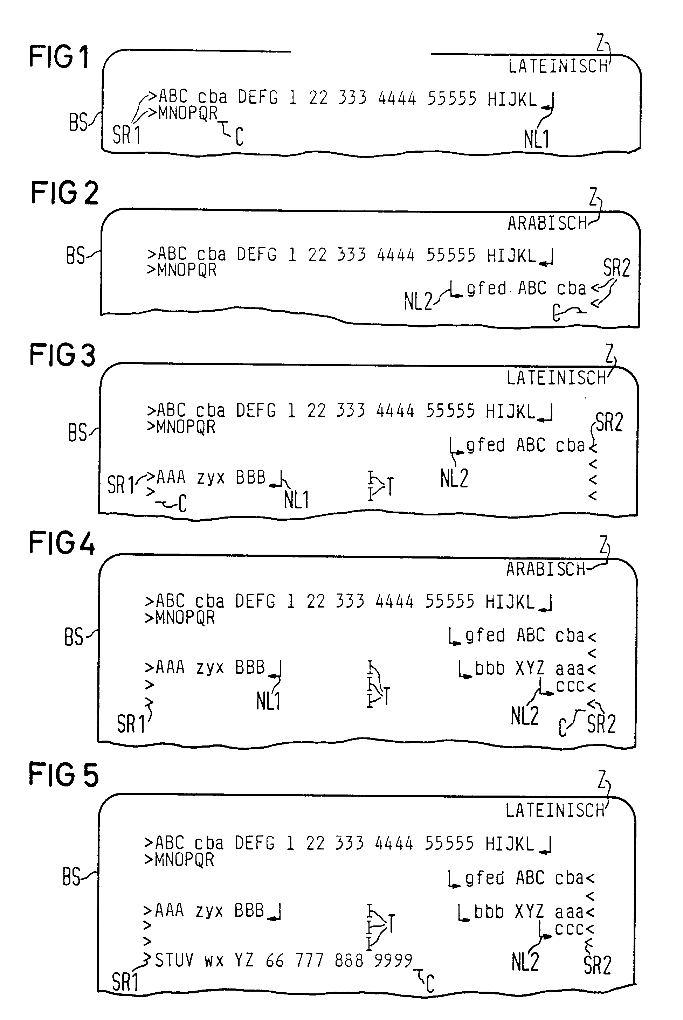

Bei der Darstellung in FIG 1 wird ein aus lateinischen und arabischen Zeichen gebildeter Text an einem Bildschirm BS einer Textstation dargestellt. Die Textstation kann in zwei Grundstellungen "lateinisch" und "arabisch" eingestellt werden. Es wird beispielsweise angenommen, daß sich die Textstation beim Einschalten der Grundstellung "lateinisch" befindet. Dann wird das Wort "lateinisch" in einer Zustandszeile Z am Bildschirm dargestellt. Gleichzeitig wird ein Schreibrichtungsanzeiger SR1 dargestellt, der die Hauptschreibrichtung bei der Eingabe von Texten mit lateinischen Buchstaben angibt. Wenn nun ein Text mit lateinischen Buchstaben eingegeben wird, wird dieser in bekannter Weise von links nach rechts am Bildschirm dargestellt.

Bei der folgenden Darstellung werden aus Einfachheitsgründen lateinische Zeichen jeweils mit Großbuchstaben dargestellt, während arabische Zeichen durch Kleinbuchstaben dargestellt werden.

Aus der FIG 1 ist zu ersehen, daß zwischen den lateinischen Zeichen auch arabische Zeichen mit umgekehrter Schreibrichtung dargestellt werden können. Diese arabischen Zeichen sind durch die Kleinbuchstaben cba dargestellt. Am Ende der Zeile wird ein Zeichen "neue Zeile" NL1 eingegeben und auf der linken Seite des Bildschirms wird ein neuer Schreibrichtungsanzeiger SR1 dargestellt. Anschließend kann die Eingabe der lateinischen Zeichen fortgesetzt werden. Eine Schreibmarke C gibt die Stelle an, an der das jeweils nächste Zeichen dargestellt wird. Eine neue Zeile kann auch bei einem Wortumbruch selbsttätig aufgebaut werden, wenn ein Wort in einer Zeile nicht mehr untergebracht werden kann.

Bei der Darstellung in FIG 2 wird angenommen, daß nach dem in FIG 1 dargestellten Text ein vorwiegend arabischer Text eingegeben werden soll. Zu diesem Zweck wird mittels einer Taste an einer Tastatur oder unter Verwendung eines am Bildschirm BS dargestellten Menüs die Grundstellung "arabisch" ausgewählt, die wiederum in der Zustandszeile Z angezeigt wird. In dieser Grundstellung wird nun wegen der umgekehrten Hauptschreibrichtung auf der rechten Seite des Bildschirms BS ein Schreibrichtungsanzeiger SR2 dargestellt und es kann mit der Eingabe des arabischen Textes begonnen werden. Auch hier kann zwischendurch eine Umschaltung auf lateinische Zeichen erfolgen, wie es durch die Großbuchstaben ABC dargestellt ist. Am Ende der ersten Zeile des arabischen Textes wird wiederum ein Zeichen "neue Zeile" NL2 eingegeben, das die Darstellung eines neuen Schreibrichtungsanzeigers SR2 bewirkt und die Schreibmarke C steht nun unmittelbar neben diesem Schreibrichtungsanzeiger SR2 für die Eingabe der nächsten arabischen Zeichen bereit.

Bei der Darstellung in FIG 3 wird angenommen, daß wieder eine Umschaltung in die Grundstellung "lateinisch" erfolgt ist und daß nun zweisprachige Texte und zwar mit lateinischen und arabischen Zeichen in zwei verschiedenen Hälften des Bildschirms BS eingegeben werden sollen. Die Texte mit den lateinischen Zeichen werden in der linken Hälfte und die Texte mit den arabischen Zeichen werden in der rechten Hälfte des Bildschirms BS dargestellt. Zwischen den beiden Hälften werden selbsttätig Trennungszeichen T, beispielsweise in Form eines senkrechten Strichs dargestellt. Bei der Eingabe eines Zeichens "neue Zeile" NL1 oder auch selbsttätig bei der Eingabe eines Wortes, das in der Hälfte nicht mehr unterzubringen ist, wird eine neue Zeile eröffnet und auf beiden Hälften werden die entsprechenden Schreibrichtungsanzeiger SR1 und SR2 dargestellt. Auch hier ist es möglich, in der linken Hälfte arabische Zeichen darzustellen, wie es durch die Kleinbuchstaben zyx dargestellt ist. Selbstverständlich ist bei der Eingabe dieser arabischen Zeichen die Schreibrichtung umgekehrt und in der Zustandszeile Z wird "arabisch" angegeben, solange bis wieder auf "lateinisch" umgeschaltet wird.

Der in der linken Hälfte dargestellte Text kann nun in der gleichen Weise bearbeitet werden wie der in der FIG 1 dargestellte Text in der Grundstellung, der sich über die ganze Zeile erstreckt.

Bei der Darstellung in FIG 4 wird nun für die zweisprachige Darstellung ein entsprechender Text mit arabischen Zeichen in der rechten Hälfte des Bildschirms BS dargestellt. Auch hier können zwischendurch lateinische Zeichen eingegeben werden, wie es durch die Großbuchstaben XYZ angegeben ist und auch hier wird jeweils nach dem Betätigen der Taste "neue Zeile" ein entsprechendes Zeichen NL2 dargestellt und eine neue Zeile vorbereitet. Ebenso wird auch hier eine neue Zeile eröffnet, wenn ein Wort in der rechten Hälfte nicht mehr vollständig unterzubringen ist. Der arabische Text in der rechten Hälfte kann nun in derselben Weise bearbeitet werden wie der in FIG 2 dargestellte Text in der Grundstellung. Diese Bearbeitung ist unabhängig von dem in der linken Hälfte dargestellten Text, d. h. bei einem Löschen von Textteilen oder einem Einfügen von Textteilen wirkt sich dies nur in der rechten Hälfte aus.

Bei der geteilten Darstellung der Texte in den beiden Hälften können alle auch für die Darstellung der Texte in den Grundstellungen vorhandenen Bearbeitungsfunktionen durchgeführt werden. Sie begrenzen sich jedoch auf den Text in jeweils einer Hälfte, ohne daß der Text in der anderen Hälfte davon beeinflußt wird.

Falls die Texte in den beiden Hälften unterschiedlich lang sind, werden in der Hälfte mit dem kürzeren Text entsprechende Pseudozeilen dargestellt. Wenn dann ein weiterer Text in der Hälfte mit dem kürzeren Text eingegeben wird, kann in der nächsten Zeile fortgesetzt werden. Es erweist sich jedoch als zweckmäßig, dann nicht eine neue Zeile aufzubauen, sondern nach der letzten Zeile des kürzeren Textes fortzusetzen. Die Schreibmarke C springt in diesem Fall somit in die nächste Zeile des kürzeren Textes und wartet auf die Eingabe der neuen Zeichen.

Die Umschaltung in die jeweilige Grundschreibrichtung "lateinisch" oder "arabisch˝ kann bei einem bereits vorhandenen Text in der geteilten Darstellung dadurch erfolgen, daß die Schreibmarke C durch entsprechende Tasten an der Tastatur in diejenige Hälfte bewegt wird, die der jeweiligen Hauptschreibrichtung zugeordnet ist. Damit ändert sich in der Zustandszeile die Anzeige automatisch, je nachdem in welche Hälfte die Schreibmarke C bewegt wird.

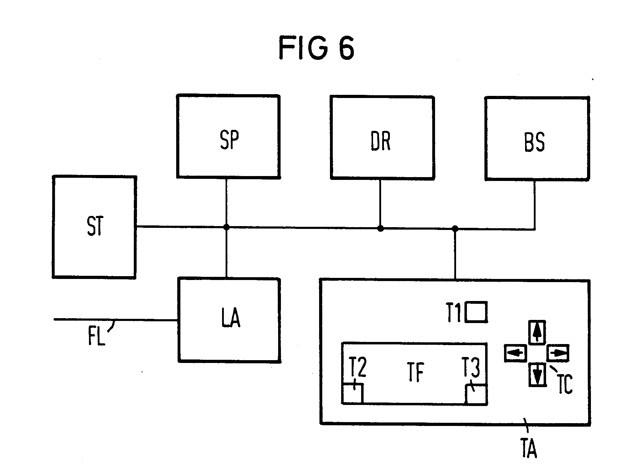

Bei der Darstellung in FIG 5 wird durch das Betätigen einer Taste an der Tastatur oder wieder durch ein am Bildschirm BS dargestelltes Menü ein Zurückschalten von der geteilten Darstellung in die Grundstellung "lateinisch" durchgeführt und es können in ähnlicher Weise wie in den FIG 1 und 2 wieder Texte mit lateinischen und/oder arabischen Zeichen eingegeben werden.

Die in FIG 6 dargestellte Anordnung zur Durchführung des Verfahrens ist beispielsweise eine als lateinische/arabische Fernschreibmaschine ausgebildete Textstation, die eine Tastatur TA zum Eingeben der Texte unter Verwendung eines Tastenfelds TF, einen Bildschirm BS zum Darstellen der Texte und einen Drucker DR zum Ausgeben der Texte enthält. Zusätzlich enthält die Textstation eine Leitungsanpassung LA, die an einer Fernleitung FL für die Übertragung der Texte angeschlossen ist. Eine Steuereinheit ST steuert den zeitlichen Ablauf der Funktionen in der Textstation und insbesondere die geteilte Darstellung der verschiedensprachigen Texte am Bildschirm BS sowie die Durchführung der verschiedenen Bearbeitungsfunktionen nur in jeweils einer der Hälften. Die Steuereinheit ST enthält zweckmäßigerweise einen Mikroprozessor, der die entsprechenden Funktionen durchführt. Zusätzlich enthält die Textstation noch einen Speicher SP, der einerseits als ein Halbleiterspeicher für das Speichern der Programme des Mikroprozessors und der Texte und andererseits als ein magneto-motorischer Speicher ausgebildet sein kann, in dem vorzugsweise die Texte gespeichert sind. Die Tastatur enthält außer dem Tastenfeld TF und Tasten TC für die Steuerung der Bewegung der Schreibmarke C am Bildschirm BS eine Taste T1, mit der zwischen der Grundstellung und der geteilten Darstellung umschaltbar ist, sowie eine Taste T2, nach deren Betätigung die eingegebenen Zeichen als lateinische Zeichen interpretiert werden und eine Taste T3, nach deren Betätigung die eingegebenen Zeichen als arabische Zeichen interpretiert werden. Anstelle der Tasten T1 bis T3 kann auch am Bildschirm BS ein entsprechendes Menü dargestellt werden, aus dem durch Bewegung der Schreibmarke C mittels der Tasten TC die entsprechenden Einstellungen ausgewählt werden können.

## Patentansprüche

1. Verfahren zum Bearbeiten von verschiedensprachigen Texten, die in zwei Hälften eines Bildschirms (BS) einer Textstation in Abhängigkeit von einer der Bildschirmhälfte zugeordneten Schreibmarke (C) separat durch das Eingeben von Zeichen gebildet und dargestellt werden,
**dadurch gekennzeichnet,** daß
mit der Eingabe der textbildenden Zeichen einer Sprache in unbeschriebene Bildschirmhalbzeilen der Bildschirmhälften in der schreibmarkenaktivierten Bildschirmhälfte Textzeilen und in der schreibmarkendeaktivierten Bildschirmhälfte für die Eingabe der textbildenden Zeichen einer weiteren Sprache vorbereitete Pseudozeilen dargestellt werden und daß
mit der Eingabe der textbildenden Zeichen der weiteren Sprache in die Pseudozeilen der Bildschirmhälften die Pseudozeilen in weitere dargestellte Textzeilen umgewandelt werden.

2. Verfahren nach Anspruch 1, **dadurch gekennzeichnet,** daß am Bildschirm (BS) zusätzlich textbildende Zeichen der einen oder anderen Sprache in ganzen Bildschirmzeilen dargestellt werden.

3. Verfahren nach Anspruch 2, **dadurch gekennzeichnet,** daß das Umschalten von der halbzeiligen Darstellung in den Bildschirmhälften in die ganzzeilige Darstellung und die Rückschaltung durch das Betätigen einer Taste (T1) an einer dem Bildschirm (BS) zugeordneten Tastatur (TA) erfolgt.

4. Verfahren nach Anspruch 2, **dadurch gekennzeichnet,** daß das Umschalten von der halbzeiligen Darstellung in den Bildschirmhälften in die ganzzeilige Darstellung und die Rückschaltung durch ein am Bildschirm (BS) dargestelltes Menü erfolgt.

5. Verfahren nach Anspruch 1 bis Anspruch 4, **dadurch gekennzeichnet,** daß die textbildenden Zeichen der einen oder anderen Sprache in den Bildschirmhälften in zwei unterschiedliche Hauptschreibrichtungen dargestellt werden.

6. Verfahren nach Anspruch 5, **dadurch gekennzeichnet,** daß die textbildenden Zeichen in den Bildschirmhälften in beiden Schreibrichtungen gemischt dargestellt werden.

7. Verfahren nach Anspruch 5 oder 6, **dadurch gekennzeichnet,** daß in jeder Bildschirmhälfte Schreibrichtungsanzeiger (SR1, SR2) dargestellt werden, die die jeweiligen Hauptschreibrichtungen in den Bildschirmhälften anzeigen.

8. Verfahren nach Anspruch 7, **dadurch gekennzeichnet,** daß die Hauptschreibrichtungen in den jeweiligen Bildschirmhälften fest in der Textstation eingestellt sind.

9. Verfahren nach Anspruch 1 bis Anspruch 8, **dadurch gekennzeichnet,** daß die textbildenden Zeichen in den ganzen Bildschirmzeilen in beiden Hauptschreibrichtungen dargestellt werden.

10. Verfahren nach Anspruch 9, **dadurch gekennzeichnet,** daß die textbildenden Zeichen in den ganzen Bildschirmzeilen in beiden Schreibrichtungen gemischt dargestellt werden.

11. Verfahren nach einem der Ansprüche 1 bis 10, **dadurch gekennzeichnet,** daß eine Zustandszeile (Z) am Bildschirm (BS) vorgesehen ist, in der die jeweilige Hauptschreibrichtung angegeben ist, in der die Zeichen gerade eingegeben werden.

12. Verfahren nach Anspruch 11, **dadurch gekennzeichnet,** daß der in der Zustandszeile (Z) angegebene Zustand sich bei einer Bewegung der Schreibmarke (C) ändert, je nachdem in welcher Hälfte sich die Schreibmarke (C) befindet und wie gegebenenfalls zuvor die Zeichen eingegeben wurden.

13. Anordnung zur Durchführung des Verfahrens nach Anspruch 1 mit einer Tastatur (TA) und einem Bildschirm (BS) verbundenen Steuereinheit (ST), die eine Darstellung und Bearbeitung der Texte in den beiden Hälften unabhängig voneinander steuert und die Bearbeitungsfunktionen nur in derjenigen Hälfte ausführt, in der sich die Schreibmarke (C) gerade befindet,
**dadurch gekennzeichnet,** daß die Steuereinheit mit der Eingabe der textbildenden Zeichen einer Sprache in unbeschriebene Bildschirmhalbzeilen der Bildschirmhälften in der Schreibmarkenaktivierten Bildschirmhälfte Textzeilen und in der Schreibmarkendeaktivierten Bildschirmhälfte für die Eingabe der textbildenden Zeichen einer weiteren Sprache vorbereitete Pseudozeilen darstellt und
mit der Eingabe der textbildenden Zeichen der weiteren Sprache in die Pseudozeilen der Bildschirmhälften die Pseudozeilen in weitere dargestellte Textzeilen umwandelt.

## Claims

1. A method for processing texts in different languages, which, by inputting characters, are formed separately and displayed on two halves of a screen (BS) of a text terminal in dependence on a cursor (C) allocated to the screen halves, characterised in that, as the text-forming characters of one language are being input into unwritten screen half-lines of the screen halves, text lines are displayed in the cursor-activated screen half and pseudo-lines are displayed in the cursor-deactivated screen half provided for inputting the text-forming characters of further language, and in that as the text-forming characters of the further language are input into the pseudo-lines of the screen halves, the pseudo-lines are converted into further displayed text lines.

2. Method according to Claim 1, characterised in that text-forming characters of one or the other language are additionally displayed in whole screen lines on the screen (BS).

3. Method according to Claim 2, characterised in that the switching from the half-line display in the screen halves to the whole-line display and the switching-back is effected by operating a key (T1) on a keyboard (TA) allocated to the screen (BS).

4. Method according to Claim 2, characterised in that the switching from the half-line display in the screen halves to the whole-line display and the switching-back is effected by a menu displayed on the screen (BS).

5. Method according to one of the Claims 1 to 4, characterised in that the text-forming characters of one or the other language are displayed in two different main directions of writing in the screen halves.

6. Method according to Claim 5, characterised in that the text-forming characters are displayed mixed in both directions of writing in the screen halves.

7. Method according to Claim 5 or 6, characterised in that in each screen half, direction-of-writing indicators (SR1,SR2) are displayed which indicate the respective main directions of writing in the screen halves.

8. Method according to Claim 7, characterised in that the main directions of writing in the respective screen halves are permanently set in the text terminal.

9. Method according to one of the Claims 1 to 8, characterised in that the text-forming characters are displayed in both main directions of writing in the whole screen lines.

10. Method according to Claim 9, characterised in that the text-forming characters are displayed mixed in both directions of writing in the whole screen lines.

11. Method according to one of Claims 1 to 10, characterised in that a status line (Z) is provided on the screen (BS), in which the respective main direction of writing is specified in which the characters are currently being entered.

12. Method according to Claim 11, characterised in that the status specified in the status line (Z) changes when the cursor (C) is moved, depending on which half the cursor (C) is located in and possibly how the characters have previously been input.

13. Arrangement for carrying out the method according to Claim 1, comprising a control unit (ST), connected to a keyboard (TA) and a screen (BS), which controls a display and processing of the texts in the two halves independently of one another and only executes the processing functions in the half in which the cursor (C) is currently located, characterised in that, as the text-forming characters of one language are being input into unwritten screen half-lines of the screen halves, the control unit effects the display of text lines in the cursor-activated screen half and the display of pseudo-lines provided for the input of the text-forming characters of a further language in the cursor-deactivated screen half, and converts the pseudo-lines into further displayed text lines as the text-forming characters of the further language are input into the pseudo-lines of the screen halves.

## Revendications

1. Procédé pour traiter des textes en différentes langues, qui sont formés et représentés séparément par l'introduction de caractères dans deux moitiés d'un écran (BS) d'un poste de traitement de texte, en fonction d'une marque d'écriture (C) associée à la moitié de l'écran, caractérisé par le fait qu'avec l'introduction des caractères constituant le texte en une langue dans des demi-lignes non écrites des moitiés de l'écran, des lignes de texte sont représentées dans la moitié de l'écran activée par la marque d'écriture et des pseudo-lignes prévues pour l'introduction des caractères constituant le texte en une autre langue sont représentées dans la moitié de l'écran, qui n'est pas activée par la marque d'écriture, et que
lors de l'introduction des caractères constituant le texte en l'autre langue dans les pseudo-lignes des moitiés de l'écran, les pseudo-lignes sont converties en d'autres lignes de texte représentées.

2. Procédé suivant la revendication 1, caractérisé par le fait qu'en outre des caractères constituant le texte en une langue ou en une autre langue sont représentés dans des lignes complètes sur l'écran (BS).

3. Procédé suivant la revendication 2, caractérisé par le fait que la commutation depuis les demi-lignes dans les moitiés de l'écran en la représentation en lignes complètes et la commutation inverse, s'effectuent par actionnement d'une touche (T1) d'un clavier (TA) associé à l'écran (BS).

4. Procédé suivant la revendication 2, caractérisé par le fait que la commutation de la représentation en demilignes dans des moitiés de l'écran en la représentation en lignes complètes et la commutation inverse, s'effectuent au moyen d'un menu représenté sur l'écran (BS).

5. Procédé suivant les revendications 1 à 4, caractérisé par le fait que les caractères constituant le texte en une langue ou en une autre langue sont représentés dans les moitiés de l'écran dans deux directions différentes d'écriture principale.

6. Procédé suivant la revendication 5, caractérisé par le fait que les caractères constituant le texte sont représentés mélangés dans les moitiés de l'écran dans les deux directions d'écriture.

7. Procédé suivant la revendication 5 ou 6, caractérisé par le fait que dans chaque moitié de l'écran sont représentés des indicateurs (SR1,SR2) du sens d'écriture, qui indiquent les sens respectifs d'écriture principaux dans les moitiés de l'écran.

8. Procédé suivant la revendication 7, caractérisé par le fait que les sens d'écriture principaux dans les moitiés respectives de l'écran sont réglés de façon fixe dans le poste de traitement de texte.

9. Procédé suivant l'une des revendications 1 à 8, caractérisé par le fait que les caractères constituant le texte sont représentés dans les lignes complètes de l'écran, dans les deux sens d'écriture principaux.

10. Procédé suivant la revendication 9, caractérisé par le fait que les caractères constituant le texte sont représentés d'une manière mélangée dans les lignes complètes de l'écran dans les deux sens d'écriture.

11. Procédé suivant l'une des revendications 1 à 10, caractérisé par le fait qu'il est prévu, sur l'écran (BS), une ligne d'état (Z), dans laquelle est indiqué le sens d'écriture principal respectif, dans lequel les caractères sont précisément introduits.

12. Procédé suivant la revendication 11, caractérisé par le fait que l'état indiqué dans la ligne d'état (Z) varie lors d'un déplacement de la marque d'écriture (C), selon la moitié dans laquelle est située la marque d'écriture (C) et suivant la manière dont les caractères ont été éventuellement introduits au préalable.

13. Dispositif pour la mise en oeuvre du procédé suivant la revendication 1, comportant une unité de commande (ST), qui est raccordée à un clavier (TA) et à un écran (BS) et commande, indépendamment l'un de l'autre, une représentation et un traitement des textes dans les deux moitiés, et exécute les fonctions de traitement uniquement dans la moitié, dans laquelle est précisément située la marque d'écriture (C),
caractérisé par le fait que lors de l'introduction des caractères constituant le texte en une langue, dans des demilignes non écrites des moitiés de l'écran, l'unité de commande effectue la représentation des lignes de texte dans la moitié de l'écran activée au moyen de la marque d'écriture, et des pseudo-lignes prévues pour l'introduction des caractères constituant le texte en une autre langue, dans la moitié de l'écran, qui n'est pas activée par la marque d'écriture, et que lors de l'introduction des caractères constituant le texte en l'autre langue dans les pseudo-lignes des moitiés de l'écran, l'unité de commande convertit les pseudo-lignes en d'autres lignes de texte représentées.
